# EUROPEAN PATENT APPLICATION

(11) **EP 4 682 990 A1**
(43) Date of publication of application: **21.01.2026**
(21) Application number: 24895506.4
(22) Date of filing: 31.05.2024
(51) Int. Cl.: H01M 4/587, H01M 4/50, H01M 10/0525, C01B 25/45, H01M 4/13

(54) **METHOD FOR PREPARING POSITIVE ELECTRODE MATERIAL, POSITIVE ELECTRODE MATERIAL, POSITIVE ELECTRODE SHEET, BATTERY, AND ELECTRIC DEVICE**

(30) Priority: 27.11.2023 CN 202311599356
(71) Applicant: Jiangsu Contemporary Amperex Technology Limited, Changzhou, Jiangsu 213300 (CN); Jiangsu Lithitech Co., Ltd., Changzhou, Jiangsu 213300 (CN)
(72) Inventor: WANG, Caijun, Changzhou, Jiangsu 213300 (CN); JIANG, Yao, Changzhou, Jiangsu 213300 (CN); LI, Jiawei, Changzhou, Jiangsu 213300 (CN); LV, Jiale, Changzhou, Jiangsu 213300 (CN); GUO, Yongnan, Changzhou, Jiangsu 213300 (CN)
(74) Representative: Lorenz Seidler Gossel Part. mbB
(86) International application number: PCT/CN2024/096619
(87) International publication number: WO 2025/112397

(57) **Abstract**

A method for preparing a positive electrode material, a positive electrode material, a positive electrode plate, a battery, and an electric apparatus are provided. The method includes: mixing a lithium source with a phosphoric acid solution to obtain a first mixture; mixing the first mixture with manganese hydrogen phosphate, an iron source, and an optional source of an M element to obtain a second mixture; and drying and sintering the second mixture to obtain a lithium manganese iron phosphate positive electrode material; where the M element includes one or more of transition metal elements other than manganese and iron, Group IIA metal elements, Group IIIA metal elements, Group IVA metal elements, and Group VIIA elements. The method reduces side reaction gases and by-products, increases the compacted density of the positive electrode material, lowers the resistivity of the positive electrode material, and improves the specific capacity and rate performance of a battery.

## Description

### CROSS-REFERENCE TO RELATED APPLICATIONS

This application claims priority to Chinese Patent Application No. 202311599356.7, filed on November 27, 2023 and entitled "METHOD FOR PREPARING POSITIVE ELECTRODE MATERIAL, POSITIVE ELECTRODE MATERIAL, POSITIVE ELECTRODE PLATE, BATTERY, AND ELECTRIC APPARATUS", which is incorporated herein by reference in its entirety.

### TECHNICAL FIELD

This application relates to the field of secondary battery technology, and in particular, to a method for preparing a positive electrode material, a positive electrode material, a positive electrode plate, a battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of secondary batteries, higher requirements are imposed on their energy density, rate performance, and the like.

### SUMMARY

This application is made in view of the above issues, with an objective to provide a method for preparing a positive electrode material, a resulting positive electrode material, a positive electrode plate, a battery, and an electric apparatus. The method of this application reduces side reaction gases and by-products during the preparation process, increases the compacted density of the positive electrode material, and lowers the resistivity of the positive electrode material, thereby improving the specific capacity and rate performance of a battery.

To achieve the above objective, a first aspect of this application provides a method for preparing a positive electrode material, including the following steps:
mixing a lithium source with a phosphoric acid solution to obtain a first mixture;
mixing the first mixture with manganese hydrogen phosphate, an iron source, and an optional source of an M element to obtain a second mixture, where the M element includes one or more of transition metal elements other than manganese and iron, Group IIA metal elements, Group IIIA metal elements, Group IVA metal elements, and Group VIIA elements; and
drying and sintering the second mixture to obtain a lithium manganese iron phosphate positive electrode material.

Thus, in this application, the lithium source is first subjected to reaction with the phosphoric acid solution and then subjected to reaction with other raw materials, helping improve the lithium-ion conductivity of the material and reduce side reaction gases and by-products, thereby increasing the compacted density of the positive electrode material, lowering the resistivity of the material, and improving the specific capacity and rate performance of a battery.

In any embodiment, the positive electrode material includes a compound LiₐMnₓFe_{y}M_{b}PO₄, where x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; and M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine.

A second aspect of this application provides a method for preparing a positive electrode material, including the following steps:
mixing a lithium source with a phosphoric acid solution to obtain a third mixture;
mixing the third mixture with manganese hydrogen phosphate, an iron source, a carbon source, and an optional source of an M element to obtain a fourth mixture, where the M element includes one or more of transition metal elements other than manganese and iron, Group IIA metal elements, Group IIIA metal elements, Group IVA metal elements, and Group VIIA elements; and
drying and sintering the fourth mixture to obtain a lithium manganese iron phosphate positive electrode material.

Thus, adding a carbon-containing coating layer helps improve the conductivity of the positive electrode material, further lowering the resistivity of the positive electrode material, thereby improving the specific capacity and rate performance of a battery.

In any embodiment, the positive electrode material includes a core and a coating layer coating the core, the core including the compound LiₐMnₓFe_{y}M_{b}PO₄; where x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine; and the coating layer includes carbon.

In any embodiment, the M element includes one or more elements of titanium, vanadium, chromium, copper, magnesium, aluminum, zinc, cobalt, nickel, tin, niobium, tungsten, zirconium, tantalum, cerium, europium, and fluorine.

In any embodiment, a sintering temperature is 620°C to 780°C, optionally 650°C to 750°C; and/or
a sintering duration is 6 hours to 14 hours, optionally 6 hours to 12 hours; and/or
the sintering is performed in an inert atmosphere, optionally in a nitrogen atmosphere; and/or
a temperature is raised to the sintering temperature at a velocity of 1°C/min to 15°C/min, optionally at a velocity of 2°C/min to 10°C/min.

Thus, using the above sintering temperature, duration, and/or other sintering conditions helps lower the resistivity of the positive electrode material, improving the specific capacity and rate performance of the battery.

In any embodiment, the carbon source includes one or more of an inorganic carbon source and an organic carbon source, optionally including one or more of glucose, sucrose, polyethylene glycol, polyvinyl alcohol, citric acid, hydroxypropyl β-cyclodextrin, polyvinylpyrrolidone, polyacrylic acid, polyvinylidene fluoride, polystyrene, polypropylene, and ethylene glycol, and more optionally including hydroxypropyl β-cyclodextrin; and/or
a weight of the carbon source is 4% to 7% of a total weight of manganese hydrogen phosphate and the iron source.

Thus, using the above carbon source facilitates the formation of nanoparticles in the positive electrode material, increasing the specific surface area of the positive electrode material.

In any embodiment, particle sizes Dᵥ50 of insoluble materials in the second mixture and the fourth mixture are independently 0.2 µm to 1.0 µm, optionally 0.2 µm to 0.6 µm.

In any embodiment, a molar ratio of the phosphorus element in the phosphoric acid solution to manganese hydrogen phosphate is 0.02 to 0.07, optionally 0.02 to 0.04; and/or
a molar ratio of the lithium element in the lithium source to a total phosphorus element in the phosphoric acid solution and manganese hydrogen phosphate is 1.01 to 1.05; and/or
a molar ratio of the iron element in the iron source to the total phosphorus element in the phosphoric acid solution and manganese hydrogen phosphate is 0.1 to 0.5; and/or
a molar ratio of the M element in the source of the M element to the total phosphorus element in the phosphoric acid solution and manganese hydrogen phosphate is 0.01 to 0.05; and/or
a concentration of the phosphoric acid solution is 75wt% to 85wt%; and/or
in the steps of preparing the first mixture and the third mixture, mixing durations are independently 15 minutes to 20 minutes; and/or
in the steps of preparing the second mixture and the fourth mixture, the mixing is performed by stirring and ball milling sequentially; and/or
the drying is performed using a spray dryer, and optionally, the spray dryer has an inlet air temperature of 200°C to 250°C and an outlet air temperature of 100°C to 120°C.

In any embodiment, the lithium source includes one or more of inorganic acid salts, organic acid salts, oxides, and hydroxides of lithium, optionally including one or more of lithium carbonate, lithium hydroxide, lithium acetate, lithium oxalate, lithium citrate, lithium dihydrogen phosphate, and lithium phosphate; and/or
the iron source includes one or more of inorganic acid salts, organic acid salts, oxides, and hydroxides of iron, optionally including one or more of ferrous oxalate, ferrous acetate, ferrous carbonate, iron phosphate, and iron hydrogen phosphate; and/or
the source of the M element includes one or more of inorganic acid salts, organic acid salts, oxides, and hydroxides of the M element, optionally including one or more of oxalates, acetates, carbonates, phosphates, oxides, and hydroxides of the M element.

A third aspect of this application further provides a positive electrode material including a compound LiₐMnₓFe_{y}M_{b}PO₄, where x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; and M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine.

Thus, the positive electrode material of this application contains fewer by-products, the compacted density of the positive electrode material is increased, and the resistivity of the positive electrode material is lowered, thereby improving the specific capacity and rate performance of a battery.

A fourth aspect of this application provides a positive electrode material including a core and a coating layer coating the core, the core including a compound LiₐMnₓFe_{y}M_{b}PO₄; where x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine; and the coating layer includes carbon.

Optionally, an average thickness of the coating layer is 6 nm to 12 nm, more optionally 8 nm to 12 nm.

Optionally, a weight of the carbon is 1.1% to 2% of a total weight of the positive electrode material, more optionally 1.3% to 1.5%.

Thus, adding a carbon-containing coating layer helps improve the conductivity of the positive electrode material, further lowering the resistivity of the positive electrode material, thereby improving the specific capacity and rate performance of a battery.

In any embodiment, a compacted density of the positive electrode material at 294.2 MPa is 2.09 g/cm³ to 2.48 g/cm³, optionally 2.1 g/cm³ to 2.3 g/cm³; and/or
a particle size Dᵥ50 of primary particles of the positive electrode material is 100 nm to 600 nm, optionally 100 nm to 300 nm; and/or
a BET specific surface area of the positive electrode material at a liquid nitrogen temperature is 6 m²/g to 20 m²/g, optionally 14 m²/g to 19.87 m²/g; and/or
a powder resistivity of the positive electrode material at 7.85 MPa is 10.8 Ω·cm to 870.6 Ω·cm, optionally 48.5 Ω·cm to 205.1 Ω·cm; and/or
the positive electrode material is prepared by the method according to the first or second aspect of this application.

A fifth aspect of this application provides a positive electrode plate including the positive electrode material according to the third or fourth aspect of this application or a positive electrode material prepared by the method according to the first or second aspect of this application.

A sixth aspect of this application provides a battery including the positive electrode material according to the third or fourth aspect of this application, a positive electrode material prepared by the method according to the first or second aspect of this application, or the positive electrode plate according to the fifth aspect of this application.

A seventh aspect of this application provides an electric apparatus including the battery according to the sixth aspect of this application.

### BRIEF DESCRIPTION OF DRAWINGS

FIG. 1 is a schematic diagram of a battery cell according to an embodiment of this application.
FIG. 2 is an exploded view of the battery cell according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a battery cell as a power source according to an embodiment of this application.
FIG. 7 is an SEM image of a positive electrode material of Example 1 of this application.

### Description of reference signs:

1. battery pack; 2. upper box body; 3. lower box body; 4. battery module; 5. battery cell; 51. housing; 52. electrode assembly; and 53. top cover assembly.

### DESCRIPTION OF EMBODIMENTS

Embodiments that specifically disclose a positive electrode material and a preparation method thereof, a positive electrode plate, a battery cell, a battery module, a battery pack, and an electric apparatus in this application are described in detail with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably sequentially. For example, a method including steps (a) and (b) indicates that the method may include steps (a) and (b) performed sequentially, or steps (b) and (a) performed sequentially. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, a particle size Dᵥ50 in this application refers to a particle size when a cumulative volume distribution percentage of particles reaches 50%.

### [Battery cell]

A battery cell, also known as a rechargeable battery or a storage battery, refers to a battery whose active material can be activated for continuous use through charging after the battery is discharged.

Typically, a battery cell includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is disposed between the positive electrode plate and the negative electrode plate to mainly prevent short circuits between positive and negative electrodes and to allow the active ions to pass through. The electrolyte is located between the positive electrode plate and the negative electrode plate to mainly conduct active ions.

### [Method for preparing positive electrode material]

An embodiment of this application provides a method for preparing a positive electrode material, including the following steps:
mixing a lithium source with a phosphoric acid solution to obtain a first mixture;
mixing the first mixture with manganese hydrogen phosphate, an iron source, and an optional source of an M element to obtain a second mixture, where the M element includes one or more of transition metal elements other than manganese and iron, Group IIA metal elements, Group IIIA metal elements, Group IVA metal elements, and Group VIIA elements; and
drying and sintering the second mixture to obtain a lithium manganese iron phosphate positive electrode material.

During reaction of the lithium source, manganese hydrogen phosphate, the iron source, and an optional source of another transition metal with the phosphoric acid solution, side reactions are prone to occur, producing a significant amount of side reaction gases and by-products, leading to a decrease in the compacted density and an increase in the resistivity of the positive electrode material, and leading to a lower yield of the preparation method, thereby adversely affecting the energy density and rate performance of a battery.

Although the mechanism is not yet clear, the applicant has unexpectedly found that in this application, the lithium source is first subjected to reaction with the phosphoric acid solution and then subjected to reaction with other raw materials, reducing side reaction gases and by-products, and helping improve the lithium-ion conductivity of the material, thereby increasing the compacted density of the positive electrode material, lowering the resistivity of the material, and improving the specific capacity and rate performance of the battery.

In some embodiments, the positive electrode material includes a compound LiₐMnₓFe_{y}M_{b}PO₄, where x is selected from 0.5 to 0.9, optionally 0.58 to 0.6, for example, 0.52, 0.53, 0.55, 0.56, 0.58, 0.59, 0.6, 0.63, 0.65, 0.67, 0.7, 0.72, 0.74, 0.76, 0.8, 0.83, 0.85, 0.87, 0.9, or a range defined by any of these values; y is selected from 0.1 to 0.5, optionally 0.38 to 0.4, for example, y is 0.1, 0.12, 0.15, 0.16, 0.18, 0.2, 0.23, 0.25, 0.27, 0.29, 0.3, 0.32, 0.35, 0.36, 0.37, 0.38, 0.39, 0.4, 0.43, 0.45, 0.46, 0.5, or a range defined by any of these values; a sum of x and y is 0.96 to 1, for example, 0.96, 0.98, 0.99, 1, or a range defined by any of these values; a is selected from 1.01 to 1.05, optionally 1.01 to 1.04, for example, 1.01, 1.02, 1.03, 1.04, 1.05, or a range defined by any of these values; b is selected from 0 to 0.05, optionally 0.01 to 0.05, more optionally 0.015 to 0.03, for example, 0.005, 0.01, 0.015, 0.02, 0.025, 0.03, 0.035, 0.04, 0.045, 0.05, or a range defined by any of these values; and M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine.

Another embodiment of this application provides a method for preparing a positive electrode material, including the following steps:
mixing a lithium source with a phosphoric acid solution to obtain a third mixture;
mixing the third mixture with manganese hydrogen phosphate, an iron source, a carbon source, and an optional source of an M element to obtain a fourth mixture, where the M element includes one or more of transition metal elements other than manganese and iron, Group IIA metal elements, Group IIIA metal elements, Group IVA metal elements, and Group VIIA elements; and
drying and sintering the fourth mixture to obtain a lithium manganese iron phosphate positive electrode material.

Thus, adding a carbon-containing coating layer helps improve the conductivity of the positive electrode material, further lowering the resistivity of the positive electrode material, thereby improving the specific capacity and rate performance of a battery.

In some embodiments, the positive electrode material includes a core and a coating layer coating the core, the core including the compound LiₐMnₓFe_{y}M_{b}PO₄; where x is selected from 0.5 to 0.9, optionally 0.58 to 0.6, for example, 0.52, 0.53, 0.55, 0.56, 0.58, 0.59, 0.6, 0.63, 0.65, 0.67, 0.7, 0.72, 0.74, 0.76, 0.8, 0.83, 0.85, 0.87, 0.9, or a range defined by any of these values; y is selected from 0.1 to 0.5, optionally 0.38 to 0.4, for example, 0.1, 0.12, 0.15, 0.16, 0.18, 0.2, 0.23, 0.25, 0.27, 0.29, 0.3, 0.32, 0.35, 0.36, 0.37, 0.38, 0.39, 0.4, 0.43, 0.45, 0.46, 0.5, or a range defined by any of these values; a sum of x and y is 0.96 to 1, for example, 0.96, 0.98, 0.99, 1, or a range defined by any of these values; a is selected from 1.01 to 1.05, optionally 1.01 to 1.04, for example, 1.01, 1.02, 1.03, 1.04, 1.05, or a range defined by any of these values; b is selected from 0 to 0.05, optionally 0.01 to 0.05, more optionally 0.015 to 0.03, for example, 0.005, 0.01, 0.015, 0.02, 0.025, 0.03, 0.035, 0.04, 0.045, 0.05, or a range defined by any of these values; M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine; and the coating layer includes carbon.

In some embodiments, the M element includes one or more elements of titanium, vanadium, chromium, copper, magnesium, aluminum, zinc, cobalt, nickel, tin, niobium, tungsten, zirconium, tantalum, cerium, europium, and fluorine.

In some embodiments, a sintering temperature is 620°C to 780°C, optionally 650°C to 750°C, for example, 620°C, 630°C, 640°C, 650°C, 670°C, 690°C, 700°C, 720°C, 740°C, 750°C, 770°C, 780°C, or a range defined by any of these values; and/or
a sintering duration is 6 hours to 14 hours, optionally 6 hours to 12 hours, for example, 6 hours, 7 hours, 8 hours, 9 hours, 10 hours, 11 hours, 12 hours, 13 hours, 14 hours, or a range defined by any of these values; and/or
the sintering is performed in an inert atmosphere, optionally in a nitrogen atmosphere; and/or
a temperature is raised to the sintering temperature at a velocity of 1°C/min to 15°C/min; optionally, the temperature is raised to the sintering temperature at a velocity of 2°C/min to 10°C/min. For example, the temperature is raised to the sintering temperature at a velocity of 1°C/min, 2°C/min, 4°C/min, 5°C/min, 7°C/min, 8°C/min, 9°C/min, 10°C/min, 12°C/min, 13°C/min, 14°C/min, 15°C/min, or a range defined by any of these values.

Thus, using the above sintering temperature, duration, and/or other sintering conditions helps lower the resistivity of the positive electrode material, improving the specific capacity and rate performance of the battery.

In some embodiments, the carbon source includes one or more of an inorganic carbon source and an organic carbon source, optionally including one or more of glucose, sucrose, polyethylene glycol, polyvinyl alcohol, citric acid, hydroxypropyl β-cyclodextrin, polyvinylpyrrolidone, polyacrylic acid, polyvinylidene fluoride, polystyrene, polypropylene, and ethylene glycol, and more optionally including hydroxypropyl β-cyclodextrin; and/or
a weight of the carbon source is 4% to 7% of a total weight of manganese hydrogen phosphate and the iron source, for example, 4%, 4.5%, 5%, 5.5%, 6%, 6.5%, 7%, or a range defined by any of these values.

Thus, using the above carbon source facilitates the formation of nanoparticles in the positive electrode material, increasing the specific surface area of the positive electrode material.

In some embodiments, particle sizes Dᵥ50 of insoluble materials in the second mixture and the fourth mixture are independently 0.2 µm to 1.0 µm, optionally 0.2 µm to 0.6 µm, for example, 0.2 µm, 0.23 µm, 0.25 µm, 0.27 µm, 0.28 µm, 0.3 µm, 0.32 µm, 0.34 µm, 0.36 µm, 0.38 µm, 0.4 µm, 0.42 µm, 0.44 µm, 0.45 µm, 0.47 µm, 0.49 µm, 0.5 µm, 0.53 µm, 0.55 µm, 0.57 µm, 0.6 µm, 0.62 µm, 0.64 µm, 0.65 µm, 0.67 µm, 0.7 µm, 0.73 µm, 0.75 µm, 0.78 µm, 0.8 µm, 0.83 µm, 0.85 µm, 0.87 µm, 0.9 µm, 0.92 µm, 0.95 µm, 0.97 µm, 0.99 µm, 1.0 µm, or a range defined by any of these values.

In some embodiments, a molar ratio of the phosphorus element in the phosphoric acid solution to manganese hydrogen phosphate is 0.02 to 0.07, optionally 0.02 to 0.04, for example, 0.02, 0.03, 0.04, 0.05, 0.06, 0.07, or a range defined by any of these values; and/or
a molar ratio of the lithium element in the lithium source to a total phosphorus element in the phosphoric acid solution and manganese hydrogen phosphate is 1.01 to 1.05, for example, 1.01, 1.02, 1.03, 1.04, 1.05, or a range defined by any of these values; and/or
a molar ratio of the iron element in the iron source to the total phosphorus element in the phosphoric acid solution and manganese hydrogen phosphate is 0.1 to 0.5, for example, 0.13, 0.15, 0.18, 0.2, 0.22, 0.24, 0.25, 0.27, 0.29, 0.3, 0.32, 0.34, 0.35, 0.36, 0.37, 0.38, 0.39, 0.4, 0.42, 0.44, 0.45, 0.47, 0.48, 0.49, 0.5, or a range defined by any of these values; and/or
a molar ratio of the M element in the source of the M element to the total phosphorus element in the phosphoric acid solution and manganese hydrogen phosphate is 0.01 to 0.05, for example, 0.01, 0.02, 0.03, 0.04, 0.05, or a range defined by any of these values; and/or
a concentration of the phosphoric acid solution is 75wt% to 85wt%, for example, 75wt%, 78wt%, 80wt%, 82wt%, 84wt%, 85wt%, or a range defined by any of these values; and/or
in the steps of preparing the first mixture and the third mixture, the mixing durations are independently 15 minutes to 20 minutes, for example, 15 minutes, 16 minutes, 17 minutes, 18 minutes, 19 minutes, 20 minutes, or a range defined by any of these values; and/or
in the steps of preparing the second mixture and the fourth mixture, the mixing is performed by stirring and ball milling sequentially; and/or
the drying is performed using a spray dryer; and optionally, the spray dryer has an inlet air temperature of 200°C to 250°C, for example, 200°C, 210°C, 220°C, 230°C, 240°C, 250°C, or a range defined by any of these values; and the spray dryer has an outlet air temperature of 100°C to 120°C, for example, 100°C, 105°C, 110°C, 115°C, 120°C, or a range defined by any of these values.

In this application, a particle size Dᵥ50 of insoluble materials in the mixture is tested using conventional methods in the art. For example, an appropriate amount of the mixture is taken, deionized water is added, ultrasonic treatment is performed to fully disperse the sample, and a laser particle size analyzer is used to test the particle size.

In some embodiments, the lithium source includes one or more of inorganic acid salts, organic acid salts, oxides, and hydroxides of lithium, optionally including one or more of lithium carbonate, lithium hydroxide, lithium acetate, lithium oxalate, lithium citrate, lithium dihydrogen phosphate, and lithium phosphate; and/or
the iron source includes one or more of inorganic acid salts, organic acid salts, oxides, and hydroxides of iron, optionally including one or more of ferrous oxalate, ferrous acetate, ferrous carbonate, iron phosphate, and iron hydrogen phosphate; and/or
the source of the M element includes one or more of inorganic acid salts, organic acid salts, oxides, and hydroxides of the M element, optionally including one or more of oxalates, acetates, carbonates, phosphates, oxides, and hydroxides of the M element.

### [Positive electrode material]

An embodiment of this application provides a positive electrode material including a compound LiₐMnₓFe_{y}M_{b}PO₄; where x is selected from 0.5 to 0.9, optionally 0.58 to 0.6, for example, 0.52, 0.53, 0.55, 0.56, 0.58, 0.59, 0.6, 0.63, 0.65, 0.67, 0.7, 0.72, 0.74, 0.76, 0.8, 0.83, 0.85, 0.87, 0.9, or a range defined by any of these values; y is selected from 0.1 to 0.5, optionally 0.38 to 0.4, for example, 0.1, 0.12, 0.15, 0.16, 0.18, 0.2, 0.23, 0.25, 0.27, 0.29, 0.3, 0.32, 0.35, 0.36, 0.37, 0.38, 0.39, 0.4, 0.43, 0.45, 0.46, 0.5, or a range defined by any of these values; a sum of x and y is 0.96 to 1, for example, 0.96, 0.98, 0.99, 1, or a range defined by any of these values; a is selected from 1.01 to 1.05, optionally 1.01 to 1.04, for example, 1.01, 1.02, 1.03, 1.04, 1.05, or a range defined by any of these values; b is selected from 0 to 0.05, optionally 0.01 to 0.05, more optionally 0.015 to 0.03, for example, 0.005, 0.01, 0.015, 0.02, 0.025, 0.03, 0.035, 0.04, 0.045, 0.05, or a range defined by any of these values; and M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine.

Thus, the positive electrode material of this application contains fewer by-products, the compacted density of the positive electrode material is increased, and the resistivity of the positive electrode material is lowered, thereby improving the specific capacity and rate performance of a battery.

Another embodiment of this application provides a positive electrode material including a core and a coating layer coating the core, the core including a compound LiₐMnₓFe_{y}M_{b}PO₄; where x is selected from 0.5 to 0.9, optionally 0.58 to 0.6, for example, 0.52, 0.53, 0.55, 0.56, 0.58, 0.59, 0.6, 0.63, 0.65, 0.67, 0.7, 0.72, 0.74, 0.76, 0.8, 0.83, 0.85, 0.87, 0.9, or a range defined by any of these values; y is selected from 0.1 to 0.5, optionally 0.38 to 0.4, for example, 0.1, 0.12, 0.15, 0.16, 0.18, 0.2, 0.23, 0.25, 0.27, 0.29, 0.3, 0.32, 0.35, 0.36, 0.37, 0.38, 0.39, 0.4, 0.43, 0.45, 0.46, 0.5, or a range defined by any of these values; a sum of x and y is 0.96 to 1, for example, 0.96, 0.98, 0.99, 1, or a range defined by any of these values; a is selected from 1.01 to 1.05, optionally 1.01 to 1.04, for example, 1.01, 1.02, 1.03, 1.04, 1.05, or a range defined by any of these values; b is selected from 0 to 0.05, optionally 0.01 to 0.05, more optionally 0.015 to 0.03, for example, 0.005, 0.01, 0.015, 0.02, 0.025, 0.03, 0.035, 0.04, 0.045, 0.05, or a range defined by any of these values; M includes one or more of transition metal elements other than manganese and iron, Group IIA metal elements, Group IIIA metal elements, Group IVA metal elements, and Group VIIA elements, optionally including one or more elements of titanium, vanadium, chromium, copper, magnesium, aluminum, zinc, cobalt, nickel, tin, niobium, tungsten, zirconium, tantalum, cerium, europium, and fluorine; and the coating layer includes carbon.

Optionally, an average thickness of the coating layer is 6 nm to 12 nm, more optionally 8 nm to 12 nm, for example, 6 nm, 7 nm, 8 nm, 9 nm, 10 nm, 11 nm, 12 nm, or a range defined by any of these values.

Optionally, a weight of the carbon is 1.1% to 2% of a total weight of the positive electrode material, more optionally 1.3% to 1.5%, for example, 1.1%, 1.2%, 1.3%, 1.4%, 1.5%, 1.6%, 1.7%, 1.8%, 1.9%, 2.0%, or a range defined by any of these values.

Thus, adding a carbon-containing coating layer helps improve the conductivity of the positive electrode material, further lowering the resistivity of the positive electrode material, thereby improving the specific capacity and rate performance of a battery.

In this application, the average thickness of the coating layer is tested using conventional methods in the art; for example, an SEM-EDS combined instrument is used to perform surface scanning on primary particles of the positive electrode material (with a particle size being ±0.3 µm of the particle size Dᵥ50) to determine a boundary between the core and the coating layer; a distance from the core center to the boundary and a distance from the core center to the outermost edge of the coating layer in the scanning electron microscope image are measured; measurement is performed multiple times in random orientations; then, the above test is repeated on multiple primary particles of the positive electrode material; and an average of a difference between the distance from the core center to the outermost edge of the coating layer and the distance from the core center to the boundary is used as the average thickness of the coating layer.

In this application, a weight percentage of carbon in the positive electrode material is tested using conventional methods in the art. For example, flux metal tungsten particles are added to the positive electrode material and then mixed; and the resulting mixture is placed in a high-frequency infrared carbon-sulfur analyzer, followed by sintering and testing the weight percentage of carbon in the positive electrode material.

In some embodiments, a compacted density of the positive electrode material at 294.2 MPa is 2.09 g/cm³ to 2.48 g/cm³, optionally 2.1 g/cm³ to 2.3 g/cm³, for example, 2.09 g/cm³, 2.1 g/cm³, 2.13 g/cm³, 2.16 g/cm³, 2.18 g/cm³, 2.2 g/cm³, 2.22 g/cm³, 2.25 g/cm³, 2.27 g/cm³, 2.29 g/cm³, 2.3 g/cm³, 2.32 g/cm³, 2.35 g/cm³, 2.36 g/cm³, 2.38 g/cm³, 2.4 g/cm³, 2.42 g/cm³, 2.44 g/cm³, 2.45 g/cm³, 2.46 g/cm³, 2.48 g/cm³, or a range defined by any of these values; and/or
a particle size Dᵥ50 of primary particles of the positive electrode material is 100 nm to 600 nm, optionally 100 nm to 300 nm, for example, 100 nm, 150 nm, 200 nm, 230 nm, 250 nm, 280 nm, 300 nm, 330 nm, 350 nm, 380 nm, 400 nm, 450 nm, 480 nm, 500 nm, 530 nm, 550 nm, 580 nm, 600 nm, or a range defined by any of these values; and/or
a BET specific surface area of the positive electrode material at a liquid nitrogen temperature is 6 m²/g to 20 m²/g, optionally 14 m²/g to 19.87 m²/g, for example, 6 m²/g, 8 m²/g, 9 m²/g, 10 m²/g, 11 m²/g, 12 m²/g, 13 m²/g, 15 m²/g, 15.5 m²/g, 16 m²/g, 16.3 m²/g, 16.7 m²/g, 17 m²/g, 17.3 m²/g, 18 m²/g, 19 m²/g, 20 m²/g, or a range defined by any of these values; and/or
a powder resistivity of the positive electrode material at 7.85 MPa is 10.8 Ω·cm to 870.6 Ω·cm, optionally 48.5 Ω·cm to 205.1 Ω·cm, for example, 10.8 Ω·cm, 15 Ω·cm, 20 Ω·cm, 30 Ω·cm, 35 Ω·cm, 40 Ω·cm, 45 Ω·cm, 48 Ω·cm, 50 Ω·cm, 55 Ω·cm, 56 Ω·cm, 60 Ω·cm, 65 Ω·cm, 68 Ω·cm, 70 Ω·cm, 75 Ω·cm, 80 Ω·cm, 85 Ω·cm, 90 Ω·cm, 95 Ω·cm, 100 Ω·cm, 110 Ω·cm, 120 Ω·cm, 150 Ω·cm, 160 Ω·cm, 180 Ω·cm, 190 Ω·cm, 200 Ω·cm, 205 Ω·cm, 210 Ω·cm, 250 Ω·cm, 270 Ω·cm, 300 Ω·cm, 350 Ω·cm, 400 Ω·cm, 450 Ω·cm, 500 Ω·cm, 550 Ω·cm, 600 Ω·cm, 650 Ω·cm, 700 Ω·cm, 750 Ω·cm, 800 Ω·cm, 820 Ω·cm, 840 Ω·cm, 850 Ω·cm, 860 Ω·cm, 870 Ω·cm, 870.6 Ω·cm, or a range defined by any of these values; and/or
the positive electrode material is prepared by the method described above in this application.

In this application, the compacted density of the material is tested using conventional methods in the art. For example, a method involves weighing sample powder, placing the sample powder in a compacted density mold, placing the compacted density mold into a compacted density machine, and testing the compacted density after pressing with a specified pressure.

In this application, the particle size Dᵥ50 of the primary particles of the material is tested using conventional methods in the art. For example, a method involves testing the positive electrode material using SEM, observing the primary particles in the SEM images, measuring particle sizes of multiple random primary particles, and statistically calculating the particle size Dᵥ50 of the primary particles of the positive electrode material.

In this application, the BET specific surface area of the material at the liquid nitrogen temperature is tested using conventional methods in the art. For example, a method involves placing a sample in a specific surface area test tube, filling a liquid nitrogen cup with liquid nitrogen, placing the specific surface area test tube into the liquid nitrogen cup, and testing with a specific surface area analyzer.

In this application, the powder resistivity of the material at 7.85 MPa is tested using conventional methods in the art. For example, a method involves placing a sample in a mold, placing the mold into a four-probe resistivity tester, adjusting the pressure to 7.85 MPa, and testing a forward resistivity and a reverse resistivity of the sample respectively after the height and pressure of the mold are stable, and taking an average of the two as the powder resistivity of the sample.

### [Positive electrode plate]

The positive electrode plate typically includes a positive electrode current collector and a positive electrode film layer disposed on at least one surface of the positive electrode current collector, where the positive electrode film layer includes the positive electrode material described above or a positive electrode material prepared by the method described above.

During charging and discharging of the battery, deintercalation and consumption of Li occur, and the molar content of Li in the battery varies at different states of discharge. In the enumeration of the positive electrode material in this application, the molar content of Li is an initial state of the material, that is, a state before feeding. The molar content of Li varies after the positive electrode material is applied to a battery system and undergoes charge and discharge cycles.

In the enumeration of the positive electrode material in this application, the molar content of O is only a theoretical state value, and lattice oxygen release causes the molar content of oxygen to vary, resulting in fluctuations in the actual molar content of O.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode material may further include positive electrode active materials known in the art for batteries. For example, the positive electrode material may include at least one of the following materials: lithium transition metal oxides and their modified compounds. However, this application is not limited to these materials, and other conventional materials that can be used as positive electrode active materials for batteries may also be used. These positive electrode active materials may be used alone or in combination of two or more. Examples of the lithium transition metal oxides may include but are not limited to at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), lithium nickel cobalt aluminum oxide (for example, LiNi_{0.85}Co_{0.15}Al_{0.05}Al_{0.05}O₂), and their modified compounds.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared by the following method: the components for preparing the positive electrode plate, such as the positive electrode active material, the conductive agent, the binder, and any other components, are dispersed in a solvent (for example, N-methylpyrrolidone) to form a positive electrode slurry; and the positive electrode slurry is applied on the positive electrode current collector, followed by processes such as drying and cold pressing, to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as negative electrode active materials for batteries may also be used. These negative electrode active materials may be used alone or in combination of two or more.

In some embodiments, the negative electrode film layer further optionally includes a binder. For example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer may optionally further include other additives, such as a thickener (for example, sodium carboxymethyl cellulose (CMC-Na)).

In some embodiments, the negative electrode plate may be prepared by the following method: the components for preparing the negative electrode plate, such as the negative electrode active material, the conductive agent, the binder, and any other components, are dispersed in a solvent (for example, deionized water) to form a negative electrode slurry; and the negative electrode slurry is applied on the negative electrode current collector, followed by processes such as drying and cold pressing, to obtain the negative electrode plate.

### [Electrolyte]

The electrolyte conducts ions between the positive electrode plate and the negative electrode plate. This application does not specifically limit the type of the electrolyte. The electrolyte can be selected based on needs. For example, the electrolyte may be in a liquid state, a gel state, or an all-solid state.

In some embodiments, the electrolyte is in a liquid state and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalate)borate, lithium bis(oxalate)borate, lithium difluoro(bis(oxalate))phosphate, and lithium tetrafluoro(oxalate)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. For example, the additive may include a negative electrode film-forming additive and a positive electrode film-forming additive, and may further include an additive that can improve some performance of the battery, for example, an additive for improving overcharge performance of the battery and an additive for improving high-temperature performance or low-temperature performance of the battery.

### [Separator]

In some embodiments, the battery cell further includes a separator. This application does not particularly limit the type of the separator, and the separator may be any well-known porous separator with good chemical stability and mechanical stability.

In some embodiments, the material of the separator may be selected from at least one of glass fiber, non-woven fabric, polyethylene, polypropylene, and polyvinylidene fluoride. The separator may be a single-layer film or a multilayer composite film, without particular limitation. When the separator is a multilayer composite film, the materials of the layers may be the same or different, without particular limitation.

In some embodiments, the positive electrode plate, the negative electrode plate, and the separator may be made into an electrode assembly through a winding process or a stacking process.

In some embodiments, the battery cell may include an outer package. The outer package may be used to encapsulate the electrode assembly and electrolyte described above.

In some embodiments, the outer package of the battery cell may be a hard shell, for example, a hard plastic shell, an aluminum shell, or a steel shell. The outer package of the battery cell may alternatively be a soft pack, for example, a soft pouch. The material of the soft pack may be plastic. As the plastic, polypropylene, polybutylene terephthalate, polybutylene succinate, and the like may be listed.

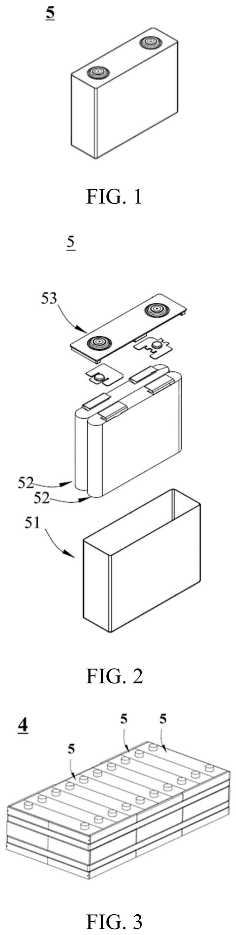

This application does not particularly limit the shape of the battery cell. The battery cell may be cylindrical, rectangular, or of any other shapes. For example, FIG. 1 shows a battery cell 5 with a rectangular structure as an example.

In some embodiments, referring to FIG. 2, the outer package may include a housing 51 and a cover plate 53. The housing 51 may include a bottom plate and side plates connected to the bottom plate, with the bottom plate and side plates enclosing to form an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through a winding process or a stacking process. The electrode assembly 52 is encapsulated in the accommodating cavity. The electrolyte infiltrates the electrode assembly 52. The battery cell 5 may include one or more electrode assemblies 52, and persons skilled in the art may select based on specific actual needs.

In some embodiments, the battery cell may be assembled into a battery module, and the battery module may include one or more battery cells. The specific quantity may be chosen by persons skilled in the art according to the application and capacity of the battery module.

FIG. 3 shows a battery module 4 as an example. Referring to FIG. 3, in the battery module 4, multiple battery cells 5 may be arranged sequentially along a length direction of the battery module 4. Certainly, the battery cells may alternatively be arranged in any other manners. Further, the multiple battery cells 5 may be fixed by fasteners.

Optionally, the battery module 4 may further include an enclosure with an accommodating space, and the multiple battery cells 5 are accommodated in the accommodating space.

In some embodiments, the battery module may be further assembled into a battery pack, and the battery pack may include one or more battery modules. The specific quantity may be chosen by persons skilled in the art according to the application and capacity of the battery pack.

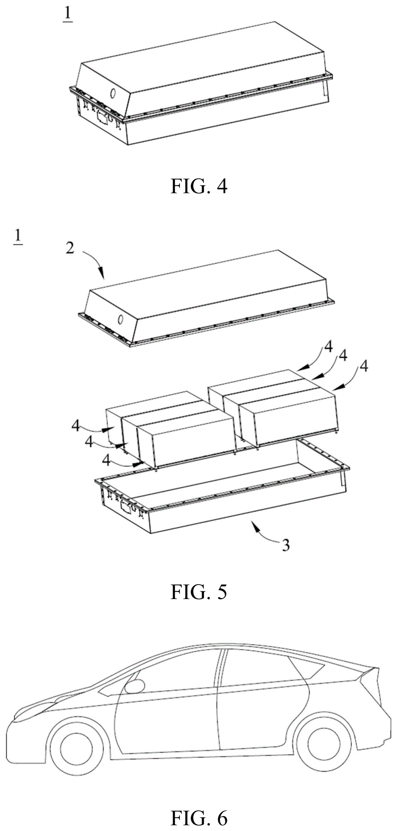

FIG. 4 and FIG. 5 show a battery pack 1 as an example. Referring to FIG. 4 and FIG. 5, the battery pack 1 may include a battery box and multiple battery modules 4 disposed in the battery box. The battery box includes an upper box body 2 and a lower box body 3, where the upper box body 2 can fit the lower box body 3 to form a closed space for accommodating the battery modules 4. The multiple battery modules 4 may be arranged in the battery box in any manner.

In addition, this application further provides an electric apparatus. The electric apparatus includes at least one of the battery cell, battery module, or battery pack provided by this application. The battery cell, the battery module, or the battery pack may be used as a power source for the electric apparatus or as an energy storage unit for the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

As an electric apparatus, a battery cell, a battery module, or a battery pack may be selected based on requirements for using the electric apparatus.

FIG. 6 shows an electric apparatus as an example. The electric apparatus is a pure electric vehicle, a hybrid electric vehicle, a plug-in hybrid electric vehicle, or the like. To satisfy requirements of the electric apparatus for high power and high energy density of a battery cell, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of positive electrode material:

45.4 g of Li₂CO₃ (with a purity greater than or equal to 99.5%) was added to a phosphoric acid solution with a weight concentration of 75%, and a first mixing was performed under stirring conditions for 15 minutes. Then, FePO₄ (with a purity greater than or equal to 99%), MnHPO₄ (with a purity greater than or equal to 99%), hydroxypropyl β-cyclodextrin, titanium dioxide, and 4.8 g of PEG4000 were added, and a second mixing was performed. A molar ratio of the lithium element in Li₂CO₃ to a total phosphorus element in the phosphoric acid solution and MnHPO₄ was 1.02. A molar ratio of the phosphorus element in the phosphoric acid solution to MnHPO₄ was 0.03. A molar ratio of FePO₄ to the total phosphorus element in the phosphoric acid solution and MnHPO₄ was 0.392. A molar ratio of titanium dioxide to the total phosphorus element in the phosphoric acid solution and MnHPO₄ was 0.02. A weight of hydroxypropyl β-cyclodextrin was 6% of a total weight of MnHPO₄ and FePO₄. Then, the mixture was transferred to a ball mill jar and ground using a planetary ball mill until a particle size Dᵥ50 of insoluble materials in a final mixture (slurry) reached 0.38 µm. The slurry was subjected to spray drying using a 10 L centrifugal spray dryer, where an inlet air temperature was 200°C, an outlet air temperature was 105°C, and a frequency of a peristaltic feed pump was 20 Hz. The dried powder was sintered in a box furnace under a nitrogen atmosphere, where a nitrogen flow rate was 6 L/min, a heating velocity was 2°C/min, a sintering temperature was 730°C, and a sintering duration was 12 hours. Then, cooling was performed to obtain a positive electrode material.

### (2) Preparation of positive electrode plate:

0.3 g of polyvinylidene fluoride binder (PVDF) was weighed and added to 10.8 g of N-methylpyrrolidone (NMP), stirred, and completely dissolved; then 2.4 g of the above positive electrode material and 0.3 g of carbon black conductive agent (SP) were added and stirred well to obtain a paste. The paste was uniformly applied on aluminum foil using a coater, followed by drying in a vacuum drying oven to remove the solvent NMP, and then rolling and punching, to obtain a disc with a diameter of 16.0 mm as a positive electrode plate.

### (3) Negative electrode plate: A metallic lithium plate was used.

### (4) Separator: A PE-PP composite film was used.

### (5) Preparation of electrolyte:

Ethylene carbonate (EC) and dimethyl carbonate (DMC) were mixed at a volume ratio of 1:1, then LiPF₆ was dissolved well in the above solution to obtain an electrolyte. In the electrolyte, a concentration of LiPF₆ was 1 mol/L.

### (6) Preparation of button battery:

The above positive electrode plate, separator, negative electrode plate, and electrolyte were assembled into a CR2032 button battery.

Preparation methods of secondary batteries in Examples 2 to 30 and Comparative Examples 1 and 2 were similar to the preparation method of the secondary battery in Example 1, with different parameters shown in Tables 1 and 2.

### Comparative Examples 1 and 2

These comparative examples were the same as Example 1 except that all raw materials were mixed and stirred together for 15 minutes at a ratio in Table 1, and then the resulting mixture was dried and sintered to obtain the positive electrode material according to the parameters in Table 1.

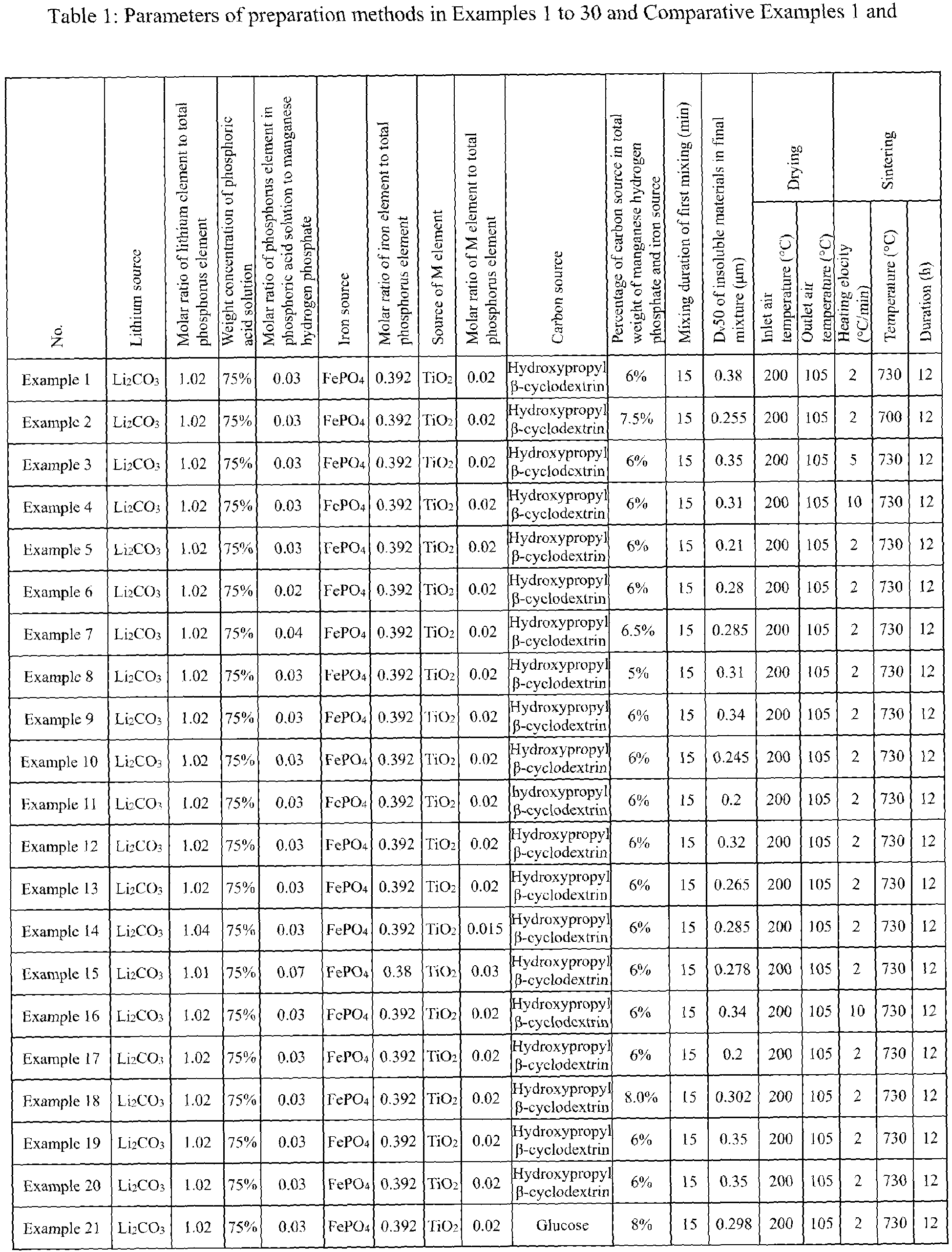

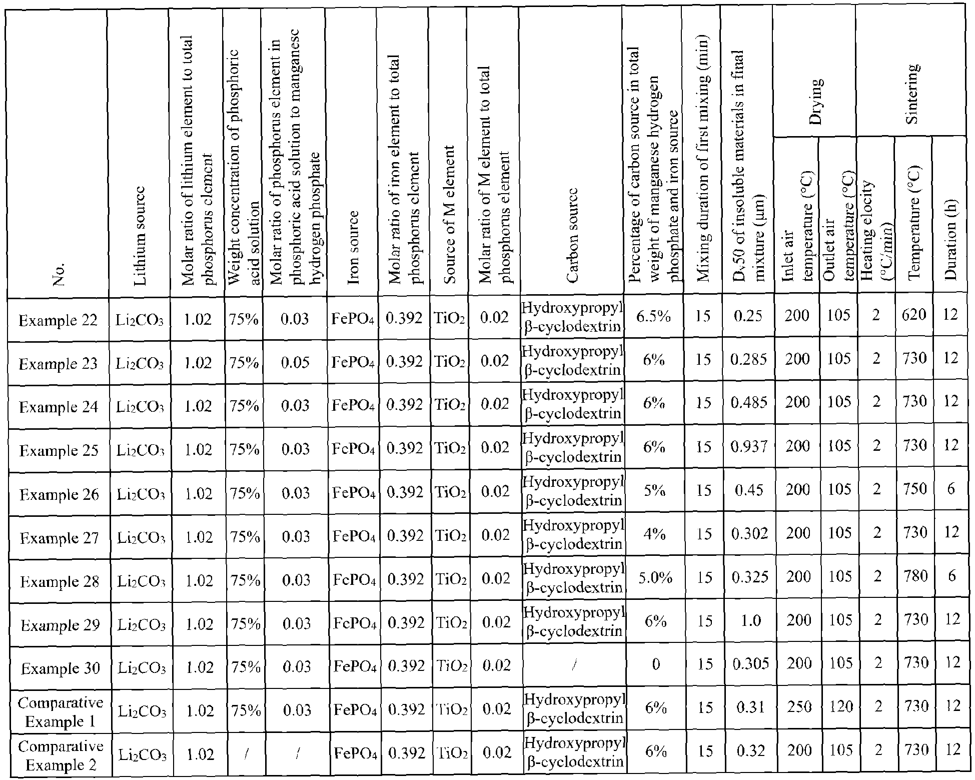

**Table 2: Product parameters in Examples 1 to 30 and Comparative Examples 1 and 2**

| No. | Core chemical formula | Coating layer | Average thickness of coating layer | Weight percentage of carbon in positive electrode material | Compacted density at 294.2 MPa (g/cm³) | Dᵥ50 of primary particles | BET at liquid nitrogen temperature (m²/g) | Powder resistivity at 7.85 MPa (Ω·cm) |
|---|---|---|---|---|---|---|---|---|
| Example 1 | Li_{1.02}Fe_{0.392}Mn_{0.588}Ti_{0.02}PO₄ | Carbon | 9 nm | 1.48% | 2.36 | 300 nm | 16.536 | 85.6 |
| Example 2 | Li_{1.02}Fe_{0.392}Mn_{0.588}Ti_{0.02}PO₄ | Carbon | 12 nm | 1.55% | 2.34 | 200 nm | 17.164 | 198.5 |
| Example 3 | Li_{1.02}Fe_{0.392}Mn_{0.588}Ti_{0.02}PO₄ | Carbon | 9 nm | 1.50% | 2.21 | 300 nm | 16.318 | 65.8 |
| Example 4 | Li_{1.02}Fe_{0.392}Mn_{0.588}Ti_{0.02}PO₄ | Carbon | 9 nm | 1.51% | 2.23 | 300 nm | 16.634 | 88.9 |
| Example 5 | Li_{1.02}Fe_{0.392}Mn_{0.588}Ti_{0.02}PO₄ | Carbon | 9 nm | 1.48% | 2.13 | 250 nm | 18.546 | 156.7 |
| Example 6 | Li_{1.02}Fe_{0.392}Mn_{0.588}Ti_{0.02}PO₄ | Carbon | 9 nm | 1.47% | 2.16 | 250 nm | 17.34 | 185.4 |
| Example 7 | Li_{1.02}Fe_{0.392}Mn_{0.588}Ti_{0.02}PO₄ | Carbon | 10 nm | 1.52% | 2.24 | 300 nm | 15.83 | 83.5 |
| Example 8 | Li_{1.02}Fe_{0.392}Mn_{0.588}Ti_{0.02}PO₄ | Carbon | 8 nm | 1.38% | 2.3 | 300 nm | 15.01 | 98.3 |
| Example 9 | Li_{1.02}Fe_{0.392}Mn_{0.588}Ti_{0.02}PO₄ | Carbon | 9 nm | 1.50% | 2.26 | 300 nm | 16.85 | 81.8 |
| Example 10 | Li_{1.02}Fe_{0.392}Mn_{0.588}Ti_{0.02}PO₄ | Carbon | 9 nm | 1.50% | 2.105 | 250 nm | 17.837 | 199.1 |
| Example 11 | Li_{1.02}Fe_{0.392}Mn_{0.588}Ti_{0.02}PO₄ | Carbon | 9 nm | 1.51% | 2.1 | 150 nm | 18.99 | 205.1 |
| Example 12 | Li_{1.02}Fe_{0.392}Mn_{0.588}Ti_{0.02}PO₄ | Carbon | 9 nm | 1.43% | 2.21 | 300 nm | 15.43 | 187.5 |
| Example 13 | Li_{1.02}Fe_{0.4}Mn_{0.6}PO₄ | Carbon | 9 nm | 1.53% | 2.25 | 250 nm | 16.34 | 229.5 |
| example 14 | Li_{1.04}Fe_{0.392}Mno_{0.588}Ti_{0.015}PO₄ | Carbon | 9 nm | 1.45% | 2.16 | 250 nm | 18.356 | 870.6 |
| Example 15 | Li_{1.01}Fe_{0.38}Mn_{0.58}Ti_{0.03}PO₄ | Carbon | 9 nm | 1.43% | 2.31 | 300 nm | 15.257 | 35.1 |
| Example 16 | Li_{1.02}Fe_{0.392}Mn_{0.588}Ti_{0.02}PO₄ | Carbon | 10 nm | 1.50% | 2.28 | 300 nm | 16.796 | 204.7 |
| Example 17 | Li_{1.02}Fe_{0.392}Mn_{0.588}Ti_{0.02}PO₄ | Carbon | 9 nm | 1.42% | 2.1 | 150 nm | 18.997 | 202.7 |
| Example 18 | Li_{1.02}Fe_{0.392}Mn_{0.588}Ti_{0.02}PO₄ | Carbon | 13 nm | 1.73% | 2.09 | 250 nm | 19.87 | 85.5 |
| Example 19 | Li_{1.02}Fe_{0.392}Mn_{0.588}Ti_{0.02}PO₄ | Carbon | 10 nm | 1.67% | 2.12 | 300 nm | 17.32 | 258.9 |
| Example 20 | Li_{1.02}Fe_{0.392}Mn_{0.588}Ti_{0.02}PO₄ | Carbon | 9 nm | 1.50% | 2.27 | 300 nm | 14.271 | 56.7 |
| Example 21 | Li_{1.02}Fe_{0.392}Mn_{0.588}Ti_{0.02}PO₄ | Carbon | 10 nm | 1.50% | 2.11 | 250 nm | 18.976 | 202.5 |
| Example 22 | Li_{1.02}Fe_{0.392}Mn_{0.588}Ti_{0.02}PO₄ | Carbon | 10 nm | 1.51% | 2.11 | 150 nm | 18.943 | 187.8 |
| Example 23 | Li_{1.02}Fe_{0.392}Mn_{0.588}Ti_{0.02}PO₄ | Carbon | 9 nm | 1.50% | 2.25 | 300 nm | 14.96 | 167.5 |
| Example 24 | Li_{1.02}Fe_{0.392}Mn_{0.588}Ti_{0.02}PO₄ | Carbon | 9 nm | 1.48% | 2.3 | 380 nm | 15.23 | 48.5 |
| Example 25 | Li_{1.02}Fe_{0.392}Mn_{0.588}Ti_{0.02}PO₄ | Carbon | 9 nm | 1.49% | 2.28 | 600 nm | 11.721 | 15.8 |
| Example 26 | Li_{1.02}Fe_{0.392}Mn_{0.588}Ti_{0.02}PO₄ | Carbon | 8 nm | 1.38% | 2.39 | 300 nm | 15.62 | 35.7 |
| Example 27 | Li_{1.02}Fe_{0.392}Mn_{0.588}Ti_{0.02}PO₄ | Carbon | 6 nm | 1.10% | 2.31 | 300 nm | 14.11 | 174.5 |
| Example 28 | Li_{1.02}Fe_{0.392}Mn_{0.588}Ti_{0.02}PO₄ | Carbon | 8 nm | 1.38% | 2.38 | 300 nm | 14.897 | 10.8 |
| Example 29 | Li_{1.02}Fe_{0.392}Mn_{0.588}Ti_{0.02}PO₄ | Carbon | 9 nm | 1.53% | 2.29 | 300 nm | 16.873 | 13.4 |
| Example 30 | Li_{1.02}Fe_{0.392}Mn_{0.588}Ti_{0.02}PO₄ | / | / | / | 2.48 | 600 nm | 6.356 | Out of range |
| Comparative Example 1 | Li_{1.02}Fe_{0.392}Mn_{0.588}Ti_{0.02}PO₄ | Carbon | 9 nm | 1.45% | 2.15 | 300 nm | 15.242 | 127.8 |
| Comparative Example 2 | Li_{1.02}Fe_{0.392}Mn_{0.588}Ti_{0.02}PO₄ | Carbon | 9 nm | 1.50% | 2.22 | 250 nm | 17.241 | 85.7 |

### Material test and battery test

### (1) Test of core chemical formula and carbon percentage:

The positive electrode material was weighed and added to a 100 mL beaker, and 10 mL of a 10%w/w nitric acid solution was added, followed by heating at 120°C for digestion for 0.5 hours, and diluting to a fixed volume using a 100 mL volumetric flask. Then, 1 mL of the solution was pipetted into a 100 mL volumetric flask using a pipette and diluted to a fixed volume to obtain a solution under test.

An inductively coupled plasma optical emission spectrometer (ICP-OES, instrument brand: Agilent 5800) was used to test percentages of lithium, manganese, iron, phosphorus, oxygen, and doping elements in the solution under test, percentages of elements in the material were calculated, and the chemical formula was determined.

0.1 g of the positive electrode material was weighed, with the addition of 1.5 g of flux metal tungsten particles, and mixing was performed. Then, the resulting mixture was placed in a high-frequency infrared carbon-sulfur analyzer, followed by sintering and testing the weight percentage of carbon in the positive electrode material.

### (2) Test of average thickness of coating layer of positive electrode material:

An SEM-EDS combined instrument was used to perform surface scanning on primary particles of the positive electrode material (with a particle size being ±0.3 µm of the particle size Dᵥ50) to determine a boundary between the core and the coating layer; a distance from the core center to the boundary and a distance from the core center to the outermost edge of the coating layer in the scanning electron microscope image were measured; measurement was performed 50 times in random orientations; then the above test was repeated on 50 primary particles of the positive electrode material; and an average of a difference between the distance from the core center to the outermost edge of the coating layer and the distance from the core center to the boundary was used as the average thickness of the coating layer.

### (3) Test of particle size Dᵥ50 of insoluble materials in mixture and particle size Dᵥ50 of primary particles of positive electrode material:

An appropriate amount of the mixture was taken, 20 mL of deionized water was added, ultrasonic treatment was performed for 5 minutes (53 kHz, 120 W) to fully disperse the sample, and a laser particle size analyzer (MasterSizer 2000) was used to test the particle size Dᵥ50 of the material.

### Test of particle size Dᵥ50 of primary particles of positive electrode material:

The positive electrode material was tested using SEM, the primary particles in the SEM images were observed, particle sizes of 100 random primary particles were measured, and calculation was performed to obtain the particle size Dᵥ50 of the primary particles of the positive electrode material.

### (4) Test of compacted density:

1 g of sample powder was weighed and placed in a compacted density mold, and the compacted density mold was placed into a compacted density machine, followed by pressing with a pressure of 294.2 MPa to test the compacted density.

### (5) Test of BET specific surface area:

1 g of sample was weighed and placed in a specific surface area test tube, a liquid nitrogen cup was filled with liquid nitrogen, the specific surface area test tube was placed into the liquid nitrogen cup, the sample was kept at a temperature of -200°C, and testing was performed using a specific surface area analyzer (Beijing JWGB, JWBK-112).

### (6) Test of powder resistivity:

1 g of a sample was weighed and placed in a mold, then the mold was placed into a four-probe resistivity tester, the pressure was adjusted to 7.85 MPa, a forward resistivity and a reverse resistivity of the sample were tested respectively after the height and pressure of the mold were stable, and an average of the two was taken as the powder resistivity of the sample.

### (7) Micromorphology evaluation:

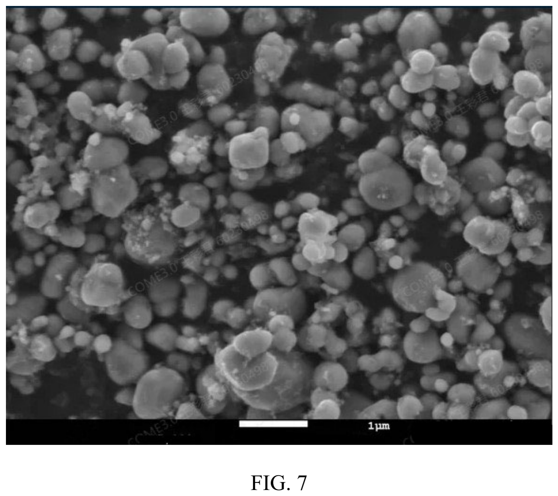

A scanning electron microscope (SEM, instrument brand: ZEISS Sigma 300) was used to observe the micromorphology of the positive electrode material of Example 1, as shown in FIG. 7.

### (8) Test method of gram capacity of battery:

After assembled, the button battery was left standing for 3 h, charged to 4.3 V at 0.1C (1C, 2C, or 3C), and charged at a constant voltage of 4.3 V until the current was less than or equal to 0.02C. Then, the battery was left standing for 5 min, discharged to 2 V at 0.1C (1C, 2C, or 3C), and a discharge capacity D1 at this point was recorded. The discharge capacity D1 was divided by a mass of the positive electrode material to obtain the gram capacity of the battery.

**Table 3: Performance test results of Examples 1 to 30 and Comparative Examples 1 and 2**

| No. | Yield | Gram capacity at 0.1C (mAh/g) | Gram capacity at 1C (mAh/g) | Gram capacity at 2C (mAh/g) | Gram capacity at 3C (mAh/g) |
|---|---|---|---|---|---|
| Example 1 | 80% | 155.2 | 150.5 | 145.6 | 140.3 |
| Example 2 | 80% | 154.8 | 149.9 | 144.3 | 138.9 |
| Example 3 | 80% | 151.8 | 146.4 | 141.5 | 135.8 |
| Example 4 | 80% | 150.9 | 145.3 | 140.6 | 134.7 |
| Example 5 | 80% | 156.8 | 151.3 | 146.4 | 141.9 |
| Example 6 | 80% | 146.1 | 140.9 | 135.4 | 128.9 |
| Example 7 | 80% | 148.1 | 143.1 | 138.2 | 133.3 |
| Example 8 | 80% | 147.1 | 141.9 | 137.2 | 132.4 |
| Example 9 | 80% | 153.1 | 148.1 | 142.9 | 136.7 |
| Example 10 | 80% | 152.9 | 147.8 | 142.6 | 137.5 |
| Example 11 | 80% | 153.3 | 148.4 | 143.2 | 138.9 |
| Example 12 | 80% | 149.8 | 144.8 | 140.9 | 135.6 |
| Example 13 | 80% | 149.1 | 142.1 | 136.8 | 128.6 |
| Example 14 | 80% | 151.8 | 146.5 | 141.4 | 136.9 |
| Example 15 | 80% | 143.6 | 138.3 | 133.3 | 127.5 |
| Example 16 | 80% | 146.4 | 141.4 | 136.3 | 131.2 |
| Example 17 | 80% | 152.9 | 147.9 | 142.7 | 136.8 |
| Example 18 | 80% | 151.7 | 146.7 | 141.5 | 136.3 |
| Example 19 | 80% | 149.4 | 145.4 | 140.3 | 135.1 |
| Example 20 | 80% | 148.2 | 143.1 | 138.1 | 132.7 |
| Example 21 | 80% | 149.8 | 144.9 | 139.7 | 134.6 |
| Example 22 | 80% | 143.8 | 140.8 | 135.1 | 128.6 |
| Example 23 | 80% | 145.3 | 140.1 | 134.9 | 128.5 |
| Example 24 | 80% | 143.8 | 138.3 | 133.5 | 128.5 |
| Example 25 | 80% | 144.7 | 135.4 | 130.5 | 125.5 |
| Example 26 | 80% | 142.7 | 137.6 | 132.5 | 121.2 |
| Example 27 | 80% | 140.6 | 135.1 | 129.8 | 123.5 |
| Example 28 | 80% | 135.8 | 130.6 | 125.5 | 119.6 |
| Example 29 | 80% | 120.8 | 114.6 | 108.7 | 98.4 |
| Example 30 | 80% | 30 | Not tested | | |
| Comparative Example 1 | 80% | 136.5 | 130.8 | 124.5 | 116.5 |
| Comparative Example 2 | 80% | 138.7 | 133.3 | 128.1 | 120.1 |

From the above results, it can be seen that:
As compared with Comparative Examples 1 and 2 where raw materials are mixed together, the batteries in Examples 1 to 27 of this application have higher gram capacities and better rate performance.

As compared with Example 22 where a lower sintering temperature is used, the battery in Example 19 of this application has higher gram capacity and better rate performance.

As compared with Example 28 in which a higher sintering temperature is used, the battery in Example 8 of this application has higher gram capacity and better rate performance.

As compared with Example 23 in which the molar ratio of the phosphorus element in the phosphoric acid solution to manganese hydrogen phosphate is higher, the batteries in Examples 1, 9, 12, and 20 of this application have higher gram capacities and better rate performance.

As compared with Examples 24 and 25 where the positive electrode materials have larger particle sizes Dᵥ50 of the primary particles and lower powder resistivities, the batteries in Examples 1, 5, 9 to 12, 17, and 20 of this application have higher gram capacities and better rate performance.

As compared with Example 26 in which the positive electrode material has a lower powder resistivity, the battery in Example 8 of this application has higher gram capacity and better rate performance.

As compared with Example 27 in which the coating layer has a smaller average thickness, the batteries in Examples 1, 8, 9, 12, 19, and 20 of this application have higher gram capacities and better rate performance.

As compared with Example 29 in which the particle size Dᵥ50 of the insoluble materials in the final mixture is larger, the batteries in Examples 1, 5, 9, 10, 11, 12, 17, and 20 of this application have higher gram capacities and better rate performance.

As compared with Example 21 in which glucose is used as the carbon source, the battery in Example 19 of this application has higher gram capacities at 1C, 2C, and 3C and better rate performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, within the scope without departing from the essence of this application, various modifications made to the embodiments that can be conceived by persons skilled in the art, and other manners constructed by combining some of the constituent elements in the embodiments are also included in the scope of this application.

## Claims

1. A method for preparing a positive electrode material, comprising the following steps:
mixing a lithium source with a phosphoric acid solution to obtain a first mixture;
mixing the first mixture with manganese hydrogen phosphate, an iron source, and an optional source of an M element to obtain a second mixture, wherein the M element comprises one or more of transition metal elements other than manganese and iron, Group IIA metal elements, Group IIIA metal elements, Group IVA metal elements, and Group VIIA elements; and
drying and sintering the second mixture to obtain a lithium manganese iron phosphate positive electrode material.

2. The method according to claim 1, wherein the positive electrode material comprises a compound LiₐMnₓFe_{y}M_{b}PO₄, wherein x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; and M comprises one or more of transition metal elements other than manganese and iron, Group IIA metal elements, Group IIIA metal elements, Group IVA metal elements, and Group VIIA elements, optionally comprising one or more elements of titanium, vanadium, chromium, copper, magnesium, aluminum, zinc, cobalt, nickel, tin, niobium, tungsten, zirconium, tantalum, cerium, europium, and fluorine.

3. A method for preparing a positive electrode material, comprising the following steps:
mixing a lithium source with a phosphoric acid solution to obtain a third mixture;
mixing the third mixture with manganese hydrogen phosphate, an iron source, a carbon source, and an optional source of an M element to obtain a fourth mixture, wherein the M element comprises one or more of transition metal elements other than manganese and iron, Group IIA metal elements, Group IIIA metal elements, Group IVA metal elements, and Group VIIA elements; and
drying and sintering the fourth mixture to obtain a lithium manganese iron phosphate positive electrode material.

4. The method according to claim 3, wherein the positive electrode material comprises a core and a coating layer coating the core, the core comprising the compound LiₐMnₓFe_{y}M_{b}PO₄; wherein x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; M comprises one or more of transition metal elements other than manganese and iron, Group IIA metal elements, Group IIIA metal elements, Group IVA metal elements, and Group VIIA elements, optionally comprising one or more elements of titanium, vanadium, chromium, copper, magnesium, aluminum, zinc, cobalt, nickel, tin, niobium, tungsten, zirconium, tantalum, cerium, europium, and fluorine; and the coating layer comprises carbon.

5. The method according to any one of claims 1 to 4, wherein the M element comprises one or more elements of titanium, vanadium, chromium, copper, magnesium, aluminum, zinc, cobalt, nickel, tin, niobium, tungsten, zirconium, tantalum, cerium, europium, and fluorine.

6. The method according to any one of claims 1 to 5, wherein
a sintering temperature is 620°C to 780°C, optionally 650°C to 750°C; and/or
a sintering duration is 6 hours to 14 hours, optionally 6 hours to 12 hours; and/or
the sintering is performed in an inert atmosphere, optionally in a nitrogen atmosphere; and/or
a temperature is raised to the sintering temperature at a velocity of 1°C/min to 15°C/min, optionally at a velocity of 2°C/min to 10°C/min.

7. The method according to claim 3 or 4, wherein the carbon source comprises one or more of an inorganic carbon source and an organic carbon source, optionally comprising one or more of glucose, sucrose, polyethylene glycol, polyvinyl alcohol, citric acid, hydroxypropyl β-cyclodextrin, polyvinylpyrrolidone, polyacrylic acid, polyvinylidene fluoride, polystyrene, polypropylene, and ethylene glycol, more optionally hydroxypropyl β-cyclodextrin; and/or
a weight of the carbon source is 4% to 7% of a total weight of manganese hydrogen phosphate and the iron source.

8. The method according to any one of claims 1 to 7, wherein particle sizes Dᵥ50 of insoluble materials in the second mixture and the fourth mixture are independently 0.2 µm to 1.0 µm, optionally 0.2 µm to 0.6 µm.

9. The method according to any one of claims 1 to 8, wherein a molar ratio of the phosphorus element in the phosphoric acid solution to manganese hydrogen phosphate is 0.02 to 0.07, optionally 0.02 to 0.04; and/or
a molar ratio of the lithium element in the lithium source to the total phosphorus element in the phosphoric acid solution and manganese hydrogen phosphate is 1.01 to 1.05; and/or
a molar ratio of the iron element in the iron source to the total phosphorus element in the phosphoric acid solution and manganese hydrogen phosphate is 0.1 to 0.5; and/or
a molar ratio of the M element in the source of the M element to the total phosphorus element in the phosphoric acid solution and manganese hydrogen phosphate is 0.01 to 0.05; and/or
a concentration of the phosphoric acid solution is 75wt% to 85wt%; and/or
in the steps of preparing the first mixture and the third mixture, mixing durations are independently 15 minutes to 20 minutes; and/or
in the steps of preparing the second mixture and the fourth mixture, the mixing is performed by stirring and ball milling sequentially; and/or
the drying is performed using a spray dryer, and optionally, the spray dryer has an inlet air temperature of 200°C to 250°C and an outlet air temperature of 100°C to 120°C.

10. The method according to any one of claims 1 to 9, wherein the lithium source comprises one or more of inorganic acid salts, organic acid salts, oxides, and hydroxides of lithium, optionally comprising one or more of lithium carbonate, lithium hydroxide, lithium acetate, lithium oxalate, lithium citrate, lithium dihydrogen phosphate, and lithium phosphate; and/or
the iron source comprises one or more of inorganic acid salts, organic acid salts, oxides, and hydroxides of iron, optionally comprising one or more of ferrous oxalate, ferrous acetate, ferrous carbonate, iron phosphate, and iron hydrogen phosphate; and/or
the source of the M element comprises one or more of inorganic acid salts, organic acid salts, oxides, and hydroxides of the M element, optionally comprising one or more of oxalates, acetates, carbonates, phosphates, oxides, and hydroxides of the M element.

11. A positive electrode material, comprising a compound LiₐMnₓFe_{y}M_{b}PO₄, wherein x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; and M comprises one or more of transition metal elements other than manganese and iron, Group IIA metal elements, Group IIIA metal elements, Group IVA metal elements, and Group VIIA elements, optionally comprising one or more elements of titanium, vanadium, chromium, copper, magnesium, aluminum, zinc, cobalt, nickel, tin, niobium, tungsten, zirconium, tantalum, cerium, europium, and fluorine.

12. A positive electrode material, comprising a core and a coating layer coating the core, wherein the core comprises the compound LiₐMnₓFe_{y}M_{b}PO₄; x is selected from 0.5 to 0.9; y is selected from 0.1 to 0.5; a sum of x and y is 0.96 to 1; a is selected from 1.01 to 1.05; b is selected from 0 to 0.05, optionally from 0.01 to 0.05; M comprises one or more of transition metal elements other than manganese and iron, Group IIA metal elements, Group IIIA metal elements, Group IVA metal elements, and Group VIIA elements, optionally comprising one or more elements of titanium, vanadium, chromium, copper, magnesium, aluminum, zinc, cobalt, nickel, tin, niobium, tungsten, zirconium, tantalum, cerium, europium, and fluorine; and the coating layer comprises carbon;
optionally, an average thickness of the coating layer is 6 nm to 12 nm, more optionally 8 nm to 12 nm; and
optionally, a weight of the carbon is 1.1% to 2% of a total weight of the positive electrode material, more optionally 1.3% to 1.5%.

13. The positive electrode material according to claim 11 or 12, wherein
a compacted density of the positive electrode material at 294.2 MPa is 2.09 g/cm³ to 2.48 g/cm³, optionally 2.1 g/cm³ to 2.3 g/cm³; and/or
a particle size Dᵥ50 of primary particles of the positive electrode material is 100 nm to 600 nm, optionally 100 nm to 300 nm; and/or
a BET specific surface area of the positive electrode material at a liquid nitrogen temperature is 6 m²/g to 20 m²/g, optionally 14 m²/g to 19.87 m²/g; and/or
a powder resistivity of the positive electrode material at 7.85 MPa is 10.8 Ω·cm to 870.6 Ω·cm, optionally 48.5 Ω·cm to 205.1 Ω·cm; and/or
the positive electrode material is prepared by the method according to any one of claims 1 to 9.

14. A positive electrode plate, comprising a positive electrode material prepared by the method according to any one of claims 1 to 10 or the positive electrode material according to any one of claims 11 to 13.

15. A battery, comprising a positive electrode material prepared by the method according to any one of claims 1 to 10, the positive electrode material according to any one of claims 11 to 13, or the positive electrode plate according to claim 14.

16. An electric apparatus, comprising the battery according to claim 15.
